# EUROPÄISCHE PATENTSCHRIFT

(11) **EP 0 900 157 B1**
(45) Veröffentlichungstag und Bekanntmachung des Hinweises auf die Patenterteilung: **31.07.2002**
(21) Anmeldenummer: 97924022.3
(22) Anmeldetag: 27.05.1997
(51) Int. Cl.: B60S 3/06

(54) **KRAFTFAHRZEUGWASCHANLAGE**
CAR WASH
STATION DE LAVAGE DE VEHICULES A MOTEUR

(30) Priorität: 28.05.1996 DE 19621296
(43) Veröffentlichungstag der Anmeldung: 10.03.1999
(73) Patentinhaber: Alfred Kärcher GmbH & Co., 71364 Winnenden (DE)
(72) Erfinder: TOTH, Thomas, D-71665 Vaihingen (DE)
(74) Vertreter: Hoeger, Stellrecht & Partner
(86) Internationale Anmeldenummer: EP9702734
(87) Internationale Veröffentlichungsnummer: WO9745301

(56) Entgegenhaltungen:
- FR-A- 1 457 311
- FR-A- 2 236 699
- GB-A- 2 243 129
- NL-A- 8 300 672
- US-A- 3 662 417

## Beschreibung

Die Erfindung betrifft eine Kraftfahrzeugwaschanlage mit in Längsrichtung eines zu reinigenden Fahrzeuges an diesem vorbeibewegbaren Reinigungswerkzeugen, wobei zu beiden Seiten des Fahrzeugs oberhalb desselben je eine parallel zu seiner Längsrichtung verschiebbare Transporteinrichtung angeordnet ist und beide Transporteinrichtungen synchron längs des Fahrzeugs verschiebbar sind.

Kraftfahrzeugwaschanlagen werden üblicherweise so ausgebildet, daß jedem der unterschiedlichen Reinigungswerkzeuge, also Horizontalwaschbürsten, Vertikalwaschbürsten, Radbürsten, Sprühanlagen, Trocknungsanlagen etc., spezielle Rahmengestelle zugeordnet werden, die dann teils einzeln, teils gemeinsam längs der Fahrbahn verfahren werden. Es ist üblich, diese Rahmengestelle als Portale auszubilden, die auf dem Boden verfahrbar gelagert sind. Bei derartigen Kraftfahrzeugwaschanlagen wird für jede Anlage ein ganz spezieller Aufbau dieser Portale oder Rahmengestelle gewählt, so daß jede Kraftfahrzeugwaschanlage speziell für den jeweiligen Einsatzort entwickelt werden muß.

Aus der gattungsbildenden FR-A-1 457 311 (Figur 7) ist eine Kraftfahrzeugwaschanlage bekannt, bei der zu beiden Seiten des Fahrzeugs oberhalb desselben je eine parallel zu seiner Längsrichtung verschiebbare Transporteinrichtung angeordnet ist. Beide Transporteinrichtungen sind synchron längs des Fahrzeugs verschiebbar. Die beiden Transporteinrichtungen sind mittels zweier quer zur Längsrichtung des Fahrzeugs ausgerichteter Traversen starr miteinander verbunden, und an den Transporteinrichtungen ist jeweils eine vertikal ausgerichtete Stütze gehalten, die einen verschwenkbaren Schwenkarm lagert, der um eine horizontale Drehachse verdrehbar ist und an dem eine horizontale Waschbürste gehalten ist. Diese Kraftfahrzeugwaschanlage weist somit insgesamt einen aufwendigen Aufbau auf.

Aus der FR-A-2 236 699 ist eine Kraftfahrzeugwaschanlage bekannt, bei der ein starrer Schwingrahmen zum Einsatz kommt, der mittels zweier Schlitten in vertikaler Richtung verschiebbar an senkrechten Stützen gehalten ist. Der Schwingrahmen ist U-förmig ausgestaltet und umfaßt zwei Schwenkarme, die über eine horizontal ausgerichtete Stange starr miteinander verbunden und mit ihren freien Enden verschwenkbar an jeweils einem Schlitten gehalten sind. Die Stange durchgreift eine Hohlwelle, an der eine horizontal ausgerichtete Waschbürste gehalten ist, die mittels eines Elektromotors zu einer Drehbewegung antreibbar ist.

Es ist Aufgabe der Erfindung, eine gattungsgemäße Kraftfahrzeugwaschanlage so auszugestalten, daß sich ein besonders einfacher und variabler Aufbau ergibt, der es unter anderem auch ermöglicht, mit vorgefertigten Bauteilen eine Kraftfahrzeugwaschanlage an die jeweiligen örtlichen Gegebenheiten und an die Ausstattungswünsche anzupassen.

Diese Aufgabe wird bei einer Kraftfahrzeugwaschanlage der eingangs beschriebenen Art erfindungsgemäß dadurch gelöst, daß an den beiden Transporteinrichtungen um eine längs ihrer Verbindungslinie verlaufende, horizontale Drehachse verdrehbar mindestens ein die beiden Transporteinrichtungen miteinander verbindender Träger gelagert ist und daß an dem Träger Reinigungswerkzeuge gehalten sind.

Bei einer solchen Kraftfahrzeugwaschanlage ist ein besonders einfacher Aufbau möglich, denn es genügt, an beiden Seiten Transporteinrichtungen vorzusehen, an denen die Träger drehbar gelagert werden. Die Verbindungsrichtung der beiden Transporteinrichtungen wird normalerweise quer zur Verschieberichtung verlaufen, grundsätzlich wäre es aber auch möglich, die Transporteinrichtungen in Verschieberichtung versetzt anzuordnen, so daß die Verbindungsrichtung schräg zur Verschieberichtung verläuft.

Durch die Drehbarkeit der Träger, an denen die Reinigungswerkzeuge gehalten sind, sind die Reinigungswerkzeuge zwischen den beiden Transporteinrichtungen pendelnd aufgehängt. Dies führt beim Auslenken aus der Vertikalen zu einer Rückstellkraft, mit der beispielsweise an den Trägern gehaltene Reinigungsbürsten gegen die zu reinigenden Kraftfahrzeugflächen gedrückt werden. Dadurch ergeben sich automatisch Andruckkräfte für die Reinigung, andererseits ermöglicht diese Lagerung aber auch, daß die Reinigungswerkzeuge ausweichen, beispielsweise dann, wenn die Andruckkräfte zu groß werden.

Bei Waschbürsten ist es üblich, über die Andruckkräfte und die dadurch auf die Antriebsvorrichtungen der drehbaren Waschbürsten ausgeübten Bremsmomente die Positionierung der Waschbürsten zu verändern, diese beispielsweise anzuheben oder seitlich zu verfahren. Diese relativ komplizierten Regelungen sind immer mit einer Zeitverzögerung verbunden, so daß es bei diesen Regelungen zu erhöhten Andruckkräften kommen kann, die nicht erwünscht sind. Diese unerwünschten erhöhten Andruckkräfte werden durch die pendelnde Aufhängung der Reinigungswerkzeuge aufgefangen, die Reinigungswerkzeuge weichen durch die pendelnde Bewegung aus und reduzieren die Andruckkräfte, bis diese durch die entsprechende Regelung der Bürstenpositionen wieder herabgesetzt werden.

Bei einer besonders bevorzugten Ausführungsform ist vorgesehen, daß die Transporteinrichtungen längs einer Fahrbahn verfahrbare Transportwagen sind.

Insbesondere kann vorgesehen sein, daß die Fahrbahn als Schiene ausgebildet ist.

Besonders günstig ist es, wenn die Transporteinrichtung einen eigenen Antrieb aufweist. Um eine synchrone Bewegung der einen gemeinsamen Träger lagernden Transporteinrichtungen zu erreichen, können diese beispielsweise von einer Steuerung digital angesteuert werden, dies ist beispielsweise mit Hilfe eines Schrittmotors möglich, der einen genau definierten Vorschub der Transporteinrichtungen gewährleistet.

Gemäß einer bevorzugten Ausführungsform ist der Träger längenveränderlich ausgebildet, beispielsweise kann der Träger bei einer bevorzugten Ausgestaltung zwei teleskopierend ineinanderschiebbare Längsabschnitte aufweisen. Eine solche Ausgestaltung ermöglicht in einfachster Weise eine Anpassung des Trägers an die Gegebenheiten, derselbe Träger kann auf diese Weise in einer breiten oder einer schmalen Kraftfahrzeugwaschanlage eingesetzt werden.

An dem Träger können die verschiedensten Reinigungswerkzeuge gehalten sein, wobei unter dem Ausdruck "Reinigungswerk-zeug" im breitesten Sinne alle Einrichtungen verstanden werden, die zur Reinigung von Kraftfahrzeugen eingesetzt werden, also insbesondere horizontale und senkrechte drehbare Waschbürsten, Radreinigungsbürsten, Sprüh- und Spritzbalken, Trocknungsgebläse, Abstreifeinrichtungen etc. Dabei ist es entweder möglich, diese Reinigungswerkzeuge an immer gleichen Trägern zu befestigen, so daß für die unterschiedlichen Reinigungswerkzeuge von einer immer gleichen Grundeinheit aus zwei Transporteinrichtungen und einem sie verbindenden Träger ausgegangen wird, oder es ist möglich, für die einzelnen Reinigungswerkzeuge spezielle Träger zu verwenden, so daß diese speziellen Träger mit den entsprechenden Reinigungswerkzeugen jeweils zwischen zwei gleich ausgebildete Transporteinrichtungen eingesetzt werden. Die Transporteinrichtungen selber für die unterschiedlichen Reinigungswerkzeuge können dabei immer gleich gewählt werden, das heißt es ist nicht notwendig, die Transporteinrichtungen an die spezielle Art der Reinigungswerkzeuge anzupassen. Dadurch ergibt sich ein modulartiger Aufbau einer derartigen Reinigungsanlage, da je nach den Erfordernissen von immer gleichen Ausgangskomponenten ausgegangen werden kann, die nur in unterschiedlicher Weise zusammengefügt werden.

Bei einer ersten bevorzugten Ausführungsform kann beispielsweise vorgesehen sein, daß der Träger im Abstand zueinander senkrechte Führungen für eine höhenverstellbare, um eine horizontale Achse drehbare Waschbürste aufweist.

Bei einer weiteren Ausführungsform kann der Träger im Abstand zueinander senkrechte Halter aufweisen, an deren unterem Ende drehbare Radbürsten gelagert sind. Dabei ist es günstig, wenn die Halter am Träger um eine parallel zur Verschieberichtung der Transporteinrichtungen verlaufende, horizontale Drehachse verschwenkbar gehalten sind, so daß die Radbürsten bei seitlicher Auslenkung aus der Vertikalen durch die Rückstellkräfte gegen die zu reinigenden Räder gedrückt werden. Diese Rückstellkraft kann noch dadurch unterstützt werden, daß bei einer bevorzugten Ausführungsform die Halter durch Federmittel aus der Vertikalen nach innen verschwenkt werden.

Bei einer weiteren bevorzugten Ausführungsform ist am Träger mindestens eine um eine senkrechte Drehachse drehbare Waschbürste angeordnet. Dabei ist es vorteilhaft, wenn die Waschbürste oder die Waschbürsten an einer längs des Trägers verfahrbaren Verschiebevorrichtung gehalten ist beziehungsweise sind. So lassen sich die senkrechten Waschbürsten längs des Trägers verfahren, so daß sie an die Breite des zu reinigen Kraftfahrzeuges angepaßt werden können und auch Vorder- und Rückseite des Kraftfahrzeuges reinigen können.

Bei den beschriebenen Ausgestaltungen wird für jede bestimmte Art eines Reinigungswerkzeuges eine Baueinheit aus zwei Transporteinrichtungen und einem Träger verwendet.

Bei einer abgewandelten Ausführungsform kann aber auch vorgesehen sein, daß zwischen zwei Transporteinrichtungen mehrere Träger gelagert sind. Diese Träger sind dann an den zwei Transporteinrichtungen hintereinander angeordnet, jeder Träger trägt dann ein eigenes Reinigungswerkzeug oder mehrere Reinigungswerkzeuge, die in Vorschubrichtung nacheinander am Kraftfahrzeug zur Anlage kommen. Grundsätzlich wäre es möglich, bei einer Kraftfahrzeugwaschanlage nur ein einziges Paar von Transporteinrichtungen zu verwenden, in denen mehrere Träger um ihre Längsachse drehbar eingehängt sind, die dann alle für die Verarbeitung des Kraftfahrzeuges notwendigen Werkzeuge tragen.

Bei einer weiteren bevorzugten Ausführungsform ist dagegen vorgesehen, daß an einem Träger in in Verschieberichtung im Abstand zueinander angeordneten Positionen verschiedene Reinigungswerkzeuge gehalten sind. Beispielsweise können an einem Träger eine horizontale Waschbürste und senkrechte Waschbürsten gelagert sein.

Dabei ist es vorteilhaft, wenn die Drehachse des Trägers an den beiden Transporteinrichtungen zwischen den verschiedenen Reinigungswerkzeugen angeordnet ist, so daß insgesamt der mehrere Reinigungswerkzeuge aufnehmende Träger um diese dazwischenliegende Achse verschwenkt wird.

Üblicherweise werden bei einer Kraftfahrzeugwaschanlage mehrere Paare von Transporteinrichtungen mit jeweils einem oder mehreren Reinigungswerkzeuge tragenden Trägern hintereinander vorgesehen sein. Diese Transporteinrichtungen können individuell unterschiedlich an dem zu reinigen Kraftfahrzeug entlanggefahren werden, so daß die einzelnen Reinigungswerkzeuge entsprechend ihrer Einwirkungsdauer an dem Kraftfahrzeug vorbeigefahren können.

Ein wesentlicher Vorteil dieser Anordnung besteht darin, daß die Kraftfahrzeugwaschanlage mehrere an gleichartigen Transporteinrichtungen gelagerte Träger aufweist, die jeweils die gewünschten Reinigungswerkzeuge tragen. Diese Transporteinrichtungen und die Träger können modulartig je nach den Anforderungen zusammengesetzt werden, an diese Träger können die einzelnen Reinigungswerkzeuge ebenfalls wunschgemäß angefügt werden, so daß die gesamte Kraftfahrzeugwaschanlage baukastenartig aus vorgefertigten Einzelteilen zusammengesetzt werden kann. Dadurch wird die Lagerhaltung vereinfacht, außerdem ist es dadurch möglich, ohne längere Planungsarbeiten für jede Anforderung schnell eine geeignete Ausführung einer Kraftfahrzeugwaschanlage zusammenzustellen.

Die nachfolgende Beschreibung bevorzugter Ausführungsformen der Erfindung dient im Zusammenhang mit der Zeichnung der näheren Erläuterung. Es zeigen:
- Figur 1:: eine Vorderansicht einer Kraftfahrzeugwaschanlage mit einem Träger mit einer horizontalen Waschbürste;
- Figur 2:: eine Seitenansicht der Kraftfahrzeugwaschanlage der Figur 1;
- Figur 3:: eine Ansicht ähnlich Figur 1 mit einem Träger mit zwei senkrechten Waschbürsten;
- Figur 4:: eine Ansicht ähnlich Figur 1 mit einem Träger mit Radwaschbürsten;
- Figur 5:: eine Ansicht ähnlich Figur 1 mit einem Träger mit horizontaler und senkrechten Waschbürsten und
- Figur 6:: eine Seitenansicht der Kraftfahrzeugwaschanlage der Figur 5.

Die in der Zeichnung dargestellten Kraftfahrzeugwaschanlagen dienen der Reinigung eines Kraftfahrzeuges 1, das auf einer Fahrbahn 2 abgestellt ist.

Zu beide Seiten dieser Fahrbahn 2 sind senkrechte Stützen 3 angeordnet, die an ihrem oberen Ende oberhalb der Kraftfahrzeuge 1 und längs der Fahrbahn 2 verlaufende Schienen 4 tragen, die sich über die gesamte Länge der Fahrbahn 2 erstrecken, deren Länge ist normalerweise deutlich größer als die Länge der zu reinigen Kraftfahrzeuge 1. Auf jeder Schiene 4 ist jeweils ein Transportwagen 5 angeordnet, der längs der Schienen 4 verschiebbar ist. Diese Verschiebbarkeit kann mittels eines Seilantriebes erfolgen, der in der Zeichnung nicht dargestellt ist, oder mittels eines eigenen Antriebes im Transportwagen 5, durch den seine Räder 6 angetrieben werden.

Jeweils zwei Transportwagen 5 auf den zu beiden Seiten der Fahrbahn 2 angeordneten Schienen 4 bilden ein Paar, das gemeinsam einen oberhalb der Fahrbahn 2 zwischen den beiden Transportwagen 5 angeordneten Träger 7 zwischen sich aufnimmt. Dieser Träger 7 ist an beiden Transportwagen 5 derart drehbar gelagert, daß der Träger 7 um eine horizontale Achse drehbar ist, die mit der Verbindungslinie der beiden Transportwagen 5 zusammenfällt. Wenn die Transportwagen 5, wie dies meistens der Fall sein wird, auf den Schienen 4 direkt nebeneinander angeordnet sind, verläuft die Drehachse quer zur Fahrbahn 2, wenn die Transportwagen 5 aber in Richtung der Fahrbahn 2 gegeneinander versetzt sind, kann die Drehachse auch schräg zur Fahrbahn 2 verlaufen.

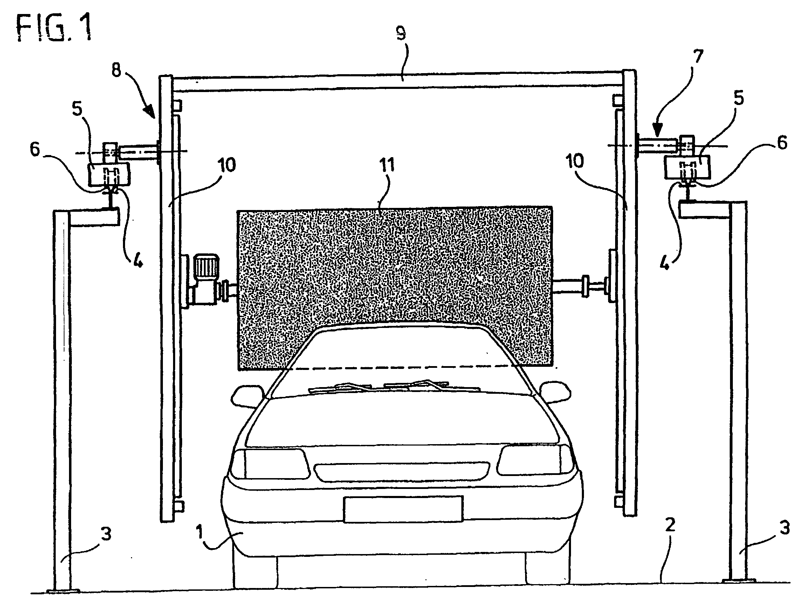

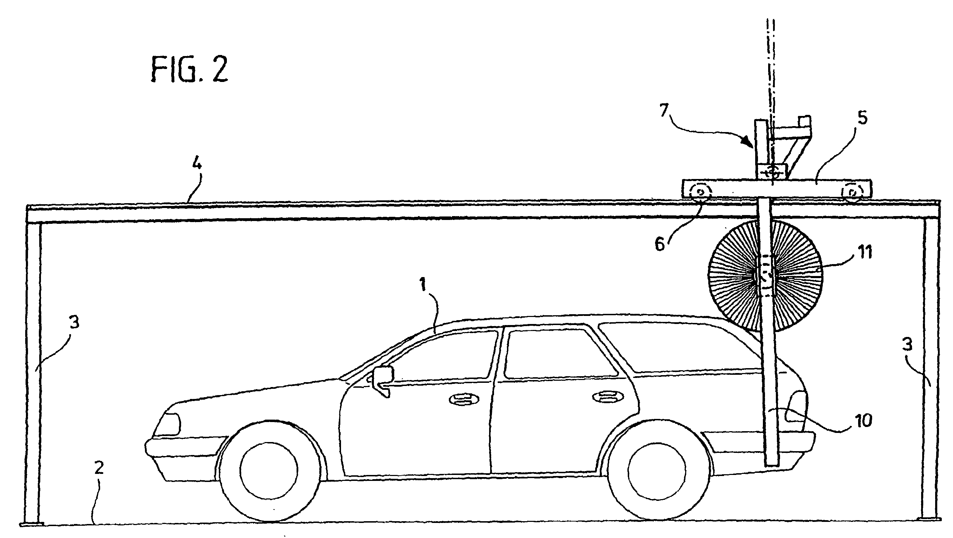

Bei dem Ausführungsbeispiel der Figuren 1 und 2 hat der Träger 7 die Form eines nach unten offenen, U-förmigen Portals 8 mit einem Quersteg 9 und senkrecht nach unten abstehenden Schenkeln 10, deren Abstand größer ist als die Breite eines zu reinigenden Kraftfahrzeuges 1.

Zwischen den Schenkeln 10 ist in an sich bekannter Weise höhenverstellbar eine um eine horizontale Achse drehbare Waschbürste 11 angeordnet.

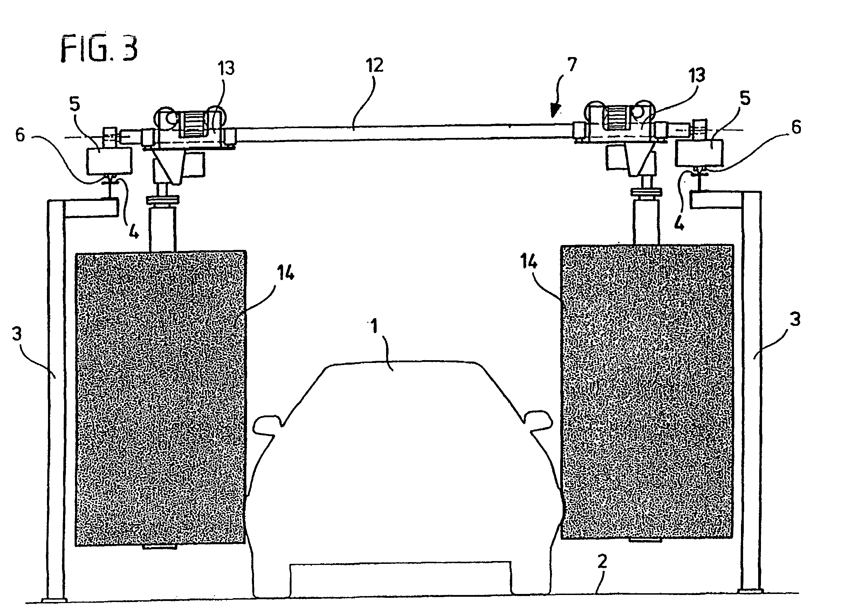

Bei dem Ausführungsbeispiel der Figur 3, bei dem entsprechende Teile dieselben Bezugszeichen tragen, ist der Träger 7 als Quertraverse 12 ausgebildet, an der zwei mit einem eigenen Antrieb versehene Wagen 13 verfahrbar sind. An jedem Wagen 13 ist hängend und vorzugsweise um eine parallel zur Fahrbahn 2 verlaufende Drehachse verschwenkbar eine senkrechte Waschbürste 14 gehalten, wobei die beiden senkrechten Waschbürsten 14 von gegenüberliegenden Seiten her an das zu reinigende Kraftfahrzeug 1 anlegbar sind.

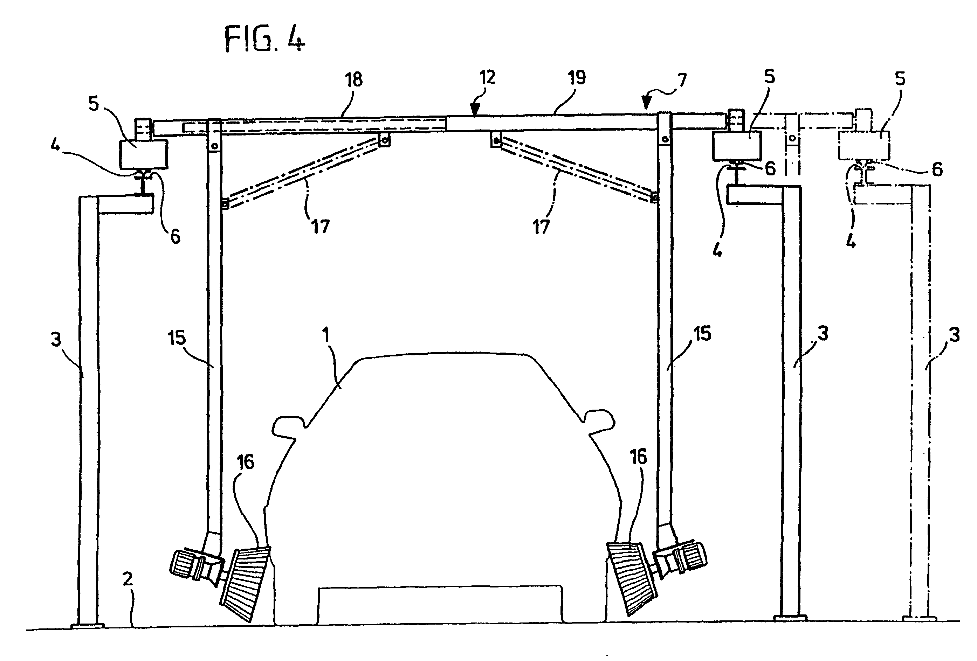

Bei dem Ausführungsbeispiel der Figur 4, bei dem wieder gleiche Teile dieselben Bezugszeichen tragen, ist der Träger 7 ebenfalls als Quertraverse 12 ausgebildet. An dieser sind um eine parallel zur Fahrbahn 2 verlaufende Drehachse verschwenkbar zwei senkrechte Halter 15 aufgehängt, die an ihrem freien Ende drehangetriebene Tellerbürsten 16 für die Radreinigung tragen. Die senkrechten Halter 15 werden durch eine Feder 17, die einerseits an der Quertraverse 12 und andererseits an den Haltern 15 angreift, geringfügig nach innen verschwenkt, so daß die Tellerbürsten 16 bei der Reinigung an den Rädern eines Kraftfahrzeuges 1 an diese angedrückt werden.

Wie aus der Darstellung der Figur 4 zu ersehen ist, ist die Quertraverse 12 aus zwei teleskopierenden Abschnitten 18, 19 aufgebaut, so daß deren Länge geändert werden kann. Es ist dadurch möglich, die Quertraverse 12 an unterschiedliche Abstände der Schienen 4 anzupassen, wie dies in Figur 4 durch die strichpunktierte und die ausgezogene Darstellung der Stützen 3 und der Schienen 4 auf der rechten Seite angedeutet ist. Selbstverständlich können die Träger aller dargestellten Ausführungsbeispiele in dieser Weise längenverstellbar ausgeführt sein.

Bei den bisher dargestellten Ausführungsbeispielen sind an jedem Träger 7 nur Reinigungswerkzeuge einer bestimmten Art angeordnet, also beispielsweise eine horizontale Waschbürste 11, senkrechte Waschbürsten 14 oder Tellerbürsten 16 für die Radpflege.

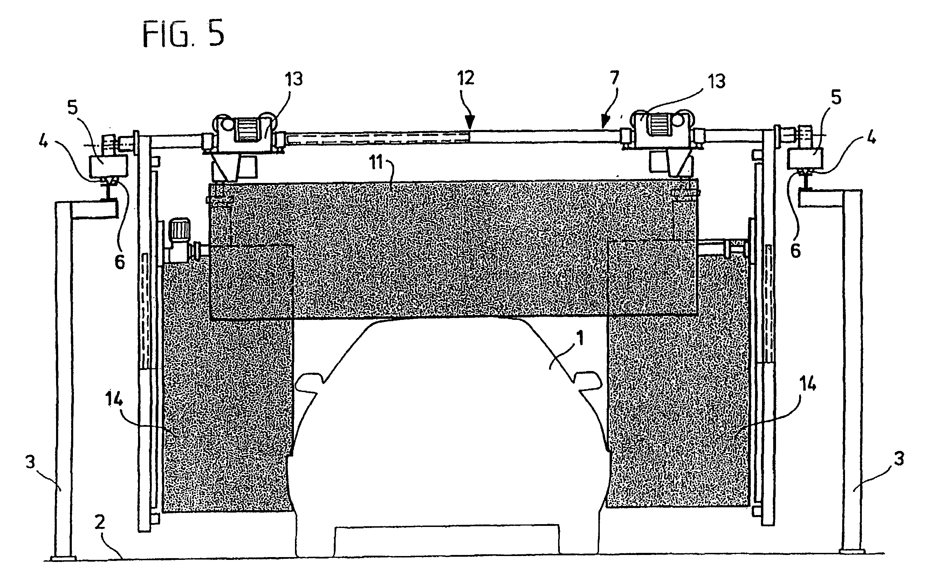

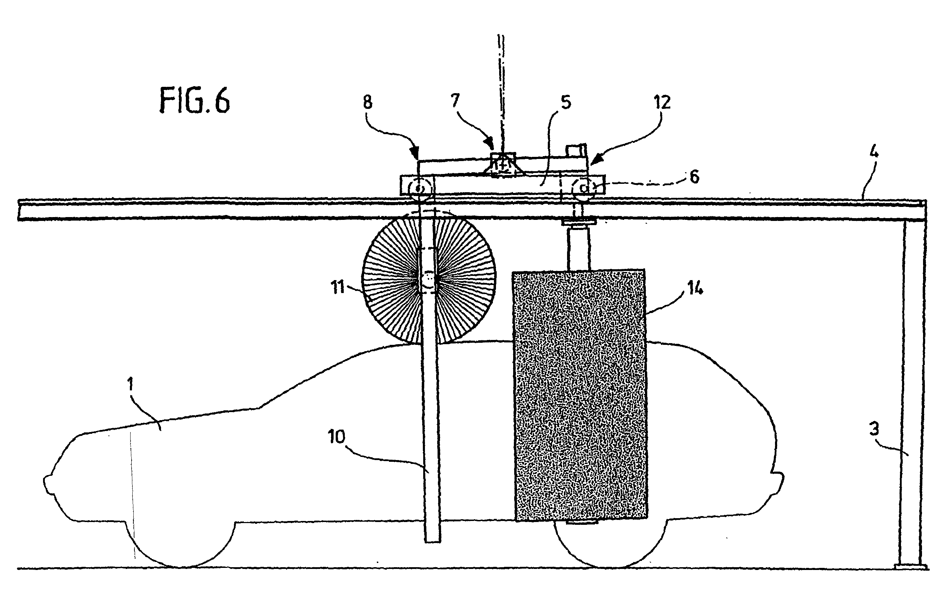

Es ist aber auch möglich, an einem Träger 7 mehrere unterschiedliche Reinigungswerkzeuge vorzusehen, wie dies beispielsweise bei der Kraftfahrzeugwaschanlage der Figuren 5 und 6 dargestellt ist. Der Träger 7 weist dort zwei parallel zur Fahrbahn 2 verlaufende Arme 20 auf, an deren Vorderende ein Portal 8 und an deren Hinterende eine Quertraverse 12 angeordnet sind, die im übrigen der Ausgestaltung gemäß den Figuren 1 und 2 beziehungsweise gemäß Figur 3 entsprechen. Dadurch sind am selben Träger eine horizontale Waschbürste 11 und zwei senkrechte Waschbürsten 14 gehalten, und zwar in Richtung der Fahrbahn 2 im Abstand zueinander. Dieser Träger ist in gleicher Weise wie die Träger der vorher beschriebenen Ausführungsbeispiele zwischen zwei Transportwagen 5 um eine horizontale Achse verschwenkbar gelagert, die horizontale Achse liegt dabei in der Mitte zwischen dem Portal 8 mit der horizontalen Waschbürste 11 einerseits und der Quertraverse 12 mit den senkrechten Waschbürsten 14 andererseits.

Selbstverständlich können an einem Träger 7 auch andere Kombinationen von Reinigungswerkzeugen angeordnet werden.

Bei den dargestellten Ausführungsbeispielen ist auf den Schienen 4 einer Kraftfahrzeugwaschanlage immer nur ein Träger dargestellt, dies ist jedoch lediglich zur Verdeutlichung geschehen. In der Praxis werden auf den Schienen 4 einer Kraftfahrzeugwaschanlage mehrere Paare von Transportwagen 5 hintereinander angeordnet werden, die mit unterschiedlichen Reinigungswerkzeugen bestückt sind. Diese Transportwagen 5 mit den unterschiedlichen Reinigungswerkzeugen können nacheinander an dem zu reinigenden Kraftfahrzeug entlanggefahren werden, so daß die entsprechenden Reinigungswerkzeuge ihre Aufgabe erfüllen können. Die Vorschubgeschwindigkeiten und Verweildauern werden dabei an die jeweiligen Reinigungswerkzeuge und die von ihnen durchzuführenden Reinigungsvorgänge angepaßt.

Bei einer Kraftfahrzeugwaschanlage dieser Bauart, die modulartig aufgebaut ist, ist es jederzeit möglich, Reinigungswerkzeuge auszuwechseln, beispielsweise dann, wenn die Waschanlage für andere Zwecke eingerichtet werden soll. Es genügt dann, in jedes Paar von Transportwagen 5 einen neuen Träger 7 mit entsprechend abgeänderten Reinigungswerkzeugen einzusetzen, die in jedem Fall pendelnd an den Transportwagen 5 gelagert werden.

## Patentansprüche

1. Kraftfahrzeugwaschanlage mit in Längsrichtung eines zu reinigenden Fahrzeuges (1) an diesem vorbeibewegbaren Reinigungswerkzeugen (11, 14, 16), wobei zu beiden Seiten des Fahrzeuges (1) oberhalb desselben je eine parallel zu seiner Längsrichtung verschiebbare Transporteinrichtung (5) angeordnet ist und beide Transporteinrichtungen (5) synchron längs des Fahrzeuges (1) verschiebbar sind, **dadurch gekennzeichnet, daß** an den beiden Transporteinrichtungen (5) um eine längs ihrer Verbindungslinie verlaufende horizontale Drehachse verdrehbar mindestens ein die beiden Transporteinrichtungen (5) miteinander verbindender Träger (7) gelagert ist und daß an dem Träger (7) die Reinigungswerkzeuge (11, 14, 16) gehalten sind.

2. Anlage nach Anspruch 1, **dadurch gekennzeichnet, daß** die Transporteinrichtung (5) längs einer Fahrbahn (4) verfahrbare Transportwagen sind.

3. Anlage nach Anspruch 2, **dadurch gekennzeichnet, daß** die Fahrbahn (4) als Schiene ausgebildet ist.

4. Anlage nach einem der voranstehenden Ansprüche, **dadurch gekennzeichnet, daß** die Transporteinrichtung (5) einen eigenen Antrieb aufweist.

5. Anlage nach einem der voranstehenden Ansprüche, **dadurch gekennzeichnet, daß** der Träger (7) längenveränderlich ausgebildet ist.

6. Anlage nach Anspruch 5, **dadurch gekennzeichnet, daß** der Träger (7) zwei teleskopierend ineinanderschiebbare Längsabschnitte (18, 19) aufweist.

7. Anlage nach einem der voranstehenden Ansprüche, **dadurch gekennzeichnet, daß** der Träger (7) im Abstand zueinander senkrechte Führungen (10) für eine höhenverstellbare, um eine horizontale Achse drehbare Waschbürste (11) aufweist.

8. Anlage nach einem der Ansprüche 1 bis 6, **dadurch gekennzeichnet, daß** der Träger (7) im Abstand zueinander senkrechte Halter (15) aufweist, an deren unterem Ende drehbare Radbürsten (16) gelagert sind.

9. Anlage nach Anspruch 8, **dadurch gekennzeichnet, daß** die Halter (15) am Träger (7) um eine parallel zur Verschieberichtung der Transporteinrichtungen (5) verlaufende, horizontale Drehachse verschwenkbar gehalten sind.

10. Anlage nach Anspruch 9, **dadurch gekennzeichnet, daß** die Halter (15) durch Federmittel (17) aus der Vertikalen nach innen verschwenkt werden.

11. Anlage nach einem der Ansprüche 1 bis 6, **dadurch gekennzeichnet, daß** am Träger (7) mindestens eine um eine senkrechte Drehachse drehbare Waschbürste (14) angeordnet ist.

12. Anlage nach Anspruch 11, **dadurch gekennzeichnet, daß** die Waschbürste (14) der die Waschbürsten (14) an einer längs des Trägers (7) verfahrbaren Verschiebevorrichtung (13) gehalten ist beziehungsweise sind.

13. Anlage nach einem der voranstehenden Ansprüche, **dadurch gekennzeichnet, daß** an zwei einander zugeordneten Transporteinrichtungen (5) im Abstand zueinander mehrere Träger (7) um ihre Längsachse drehbar gelagert sind.

14. Anlage nach einem der voranstehenden Ansprüche, **dadurch gekennzeichnet, daß** an einem Träger (7) in in Verschieberichtung im Abstand zueinander angeordneten Positionen verschiedene Reinigungswerkzeuge (11, 14) gehalten sind.

15. Anlage nach Anspruch 14, **dadurch gekennzeichnet, daß** die Drehachse des Trägers (7) an den beiden Transporteinrichtungen (5) zwischen den verschiedenen Reinigungswerkzeugen (11, 14) angeordnet ist.

16. Anlage nach einem der voranstehenden Ansprüche, **dadurch gekennzeichnet, daß** mehrere Paare von Transporteinrichtungen (5) mit jeweils einem Reinigungswerkzeuge (11, 14, 16) tragenden Träger (7) hintereinander vorgesehen sind.

## Claims

1. A motor vehicle washing installation having cleaning tools (11, 14, 16) which are movable past a vehicle (1) to be cleaned, in the longitudinal direction of the vehicle (1), wherein a respective transport device (5) displaceable parallel to the longitudinal direction of the vehicle (1) is arranged at either side of the vehicle (1) so as to be thereabove and both transport devices (5) are displaceable along the vehicle (1) synchronously, **characterised in that** at least one bearer (7), connecting the two transport devices (5) to one another, is mounted on the two transport devices (5) so as to be rotatable about a horizontal axis of rotation which runs along the connecting line of the transport devices (5), and **in that** the cleaning tools (11, 14, 16) are held on the bearer (7).

2. An installation according to Claim 1, **characterised in that** the transport devices (5) are transporting carriages movable along a track (4).

3. An installation according to Claim 2, **characterised in that** the track (4) is in the form of a rail.

4. An installation according to any one of the preceding Claims, **characterised in that** the transport device (5) has its own drive.

5. An installation according to any one of the preceding Claims, **characterised in that** the length of the bearer (7) can be altered.

6. An installation according to Claim 5, **characterised in that** the bearer (7) has two telescoping longitudinal portions (18, 19).

7. An installation according to any one of the preceding Claims, **characterised in that** the bearer (7) has vertical guides (10), spaced apart from one another, for a vertically-adjustable washing brush (11) rotatable about a horizontal axis.

8. An installation according to any one of Claims 1 to 6, **characterised in that** the bearer (7) has vertical supports (15) which are spaced apart from one another and on the lower end of which rotatable wheel brushes (16) are mounted.

9. An installation according to Claim 8, **characterised in that** the supports (15) are held on the bearer (7) so as to be pivotable about a horizontal axis of rotation running parallel to the displacement direction of the transport devices (5).

10. An installation according to Claim 9, **characterised in that** by means of spring means (17), the supports (15) are pivoted inwards, away from the vertical.

11. An installation according to any one of Claims 1 to 6, **characterised in that** at least one washing brush (14) rotatable about a vertical axis of rotation is arranged on the bearer (7).

12. An installation according to Claim 11, **characterised in that** the washing brush (14) or the washing brushes (14) is or are held on a displacement device (13) movable along the bearer (7).

13. An installation according to any one of the preceding Claims, **characterised in that** on two associated transport devices (5), a plurality of bearers (7) are mounted so as to be at a distance from one another and rotatable about their longitudinal axis.

14. An installation according to any one of the preceding Claims, **characterised in that** different cleaning tools (11, 14) are held on a bearer (7) in positions arranged spaced apart in the direction of displacement.

15. An installation according to Claim 14, **characterised in that** the axis of rotation of the bearer (7) on the two transport devices (5) is arranged between the different cleaning tools (11, 14).

16. An installation according to any one of the preceding Claims, **characterised in that** a plurality of pairs of transport devices (5), each with a bearer (7) bearing cleaning tools (11, 14, 16), are provided one behind the other.

## Revendications

1. Installation de lavage de véhicules automobiles comportant des outils de nettoyage (11, 14, 16) pouvant être déplacés dans la direction longitudinale d'un véhicule (1) à nettoyer, le long de ce dernier, dans laquelle respectivement un dispositif de transport (5) déplaçable parallèlement à la direction longitudinale du véhicule (1) est disposé des deux côtés du véhicule, au-dessus de ce dernier et que les deux dispositifs de transport (5) sont déplaçables d'une manière synchrone le long du véhicule (1), **caractérisé en ce qu'**au moins un support (7), qui relie entre eux les deux dispositifs de transport (5), est supporté par les deux dispositifs de transport (5) de manière à pouvoir tourner autour d'un axe horizontal de rotation qui s'étend le long de la ligne de la droite de liaison des deux dispositifs de transport, et que les outils de nettoyage (11, 14, 16) sont retenus sur le support (7).

2. Installation selon la revendication 1, **caractérisée en ce que** le dispositif de transport (5) est formé par des chariots de transport déplaçables le long d'une voie de déplacement (4).

3. Installation selon la revendication 2, **caractérisée en ce que** la voie de déplacement (4) est agencée sous la forme d'un rail.

4. Installation selon l'une des revendications précédentes, **caractérisée en ce que** le dispositif de transport (5) comporte un dispositif d'entraînement propre.

5. Installation selon l'une des revendications précédentes, **caractérisée en ce que** le support (7) est agencé de manière à avoir une longueur variable.

6. Installation selon la revendication 5, **caractérisée en ce que** le support (7) comporte deux sections longitudinales (18, 19), qui peuvent être déplacées l'une dans l'autre de façon télescopique.

7. Installation selon l'une des revendications précédentes, **caractérisée en ce que** le support (7) comporte des guides (10) distants l'un de l'autre et perpendiculaires entre eux pour une brosse de lavage (11) réglable en hauteur et pouvant tourner autour d'un axe horizontal.

8. Installation selon l'une des revendications 1 à 6, **caractérisée en ce que** le support (7) comporte des dispositifs de retenue (15) qui sont perpendiculaires entre eux à distance l'un de l'autre et sur l'extrémité inférieure desquels sont montées des brosses rotatives (16) pour les roues.

9. Installation selon la revendication 8, **caractérisée en ce que** les dispositif de retenue (15) sont retenus sur le support (7) de manière à pouvoir basculer autour d'un axe de rotation horizontal, qui s'étend parallèlement à la direction de déplacement du dispositif de transport (5).

10. Installation selon la revendication 9, **caractérisée en ce que** des moyens formant ressorts (17) font basculer vers l'intérieur les dispositifs de retenue (15) à partir de la verticale.

11. Installation selon l'une des revendications 1 à 6, **caractérisée en ce que** sur le support (7) est disposée au moins une brosse de lavage (14) pouvant tourner autour d'un axe de rotation vertical.

12. Installation selon la revendication 11, **caractérisée en ce que** la ou les brosses de lavage (14) est ou sont retenues sur un dispositif de déplacement (13), déplaçable le long du support (7).

13. Installation selon l'une des revendications précédentes, **caractérisée en ce que** plusieurs supports (7) sont montés de manière à pouvoir tourner autour de leur axe longitudinal, à distance l'un de l'autre, sur deux dispositifs de transmission (5) associés entre eux.

14. Installation selon l'une des revendications précédentes, **caractérisée en ce que** des outils de nettoyage (11, 14) sont retenus sur un support (7) dans des positions situées à distance l'une de l'autre dans la direction de déplacement.

15. Installation selon la revendication 14, **caractérisée en ce que** l'axe de rotation du support (7) est disposé sur les deux dispositifs de transport (5) entre les différents outils de nettoyage (11, 14).

16. Installation selon l'une des revendications précédentes, **caractérisée en ce que** plusieurs couples de dispositifs de transport (5) comportant respectivement un support (7) portant des outils de nettoyage (11, 14, 16) sont prévus les uns derrière les autres.
